# EUROPEAN PATENT APPLICATION

(11) **EP 2 754 697 A1**
(43) Date of publication of application: **16.07.2014**
(21) Application number: 13151174.3
(22) Date of filing: 14.01.2013
(51) Int. Cl.: C09B 67/22

(54) **High wet-fast disperse dye mixtures**

(71) Applicant: DyStar Colours Distribution GmbH, 65479 Raunheim (DE)
(72) Inventor: Vermandel, Fanny, Singapore 259117 (SG); Murgatroyd, Adrian, 65929 Frankfurt am Main (DE); Grund, Clemens, 65795 Hattersheim (DE); Hoppe, Manfred, 51515 Kürten (DE); Weingarten, Ulrich, 67067 Ludwigshafen (DE)
(74) Representative: Weingarten, Ulrich

(57) **Abstract**

The invention is directed to a dye mixture comprising at least one dye of formula (1) 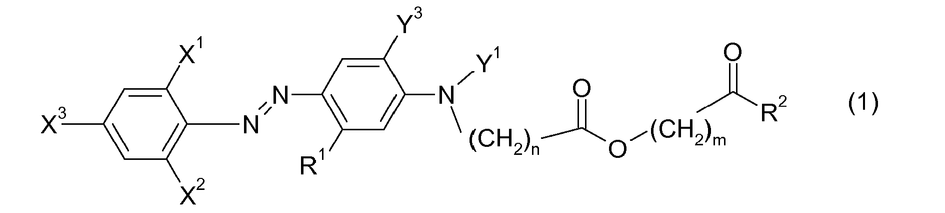 and one or more dyes selected from the group consisting of dyes of formulae (2), (5a) and (5b) 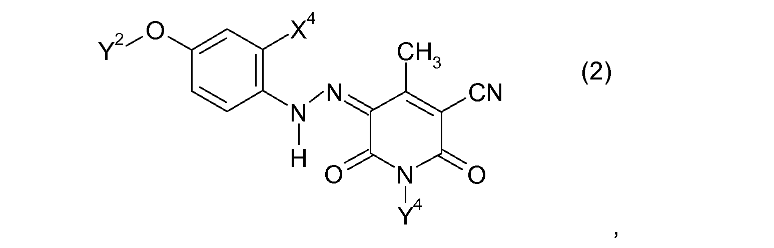 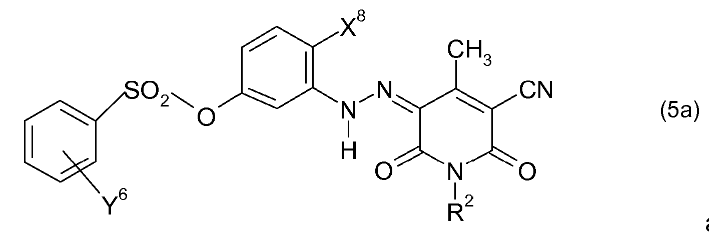 and

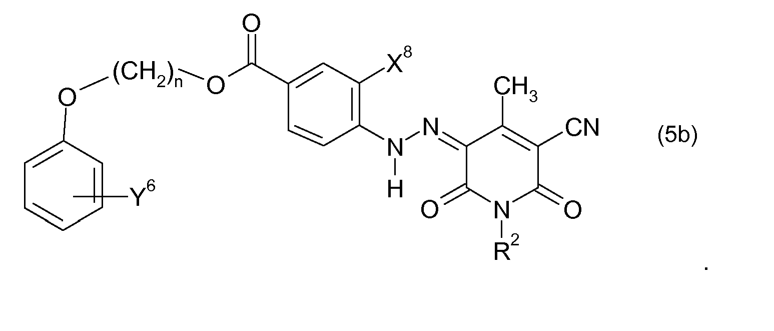

## Description

This invention relates to high wet fast disperse azo dye mixtures.

Disperse azo dyes in which the chromophoric system is linked with 2-oxoalkylketo groups are described e.g. in WO 2009 / 037215, WO 2008 / 090042, WO 2008 / 049758, WO 2005 / 056690 as well as in GB 909 843 and DE 26 12 742. Dye mixtures in Black, Navy and Brown are also well known for example from WO 1997 / 04031, EP 0 667 376 and JP 11158402 but all have in common unsatisfactory wash- and contact-fastness properties.

Surprisingly it was now found that dyes with 2-oxo-alkylketo groups with orange / brown- to red / rubine-shades and selected other azo pyridone disperse dyes give improved wash- and contact-fastness properties on polyester and polyester blends especially on polyester-elastane/polyester-spandex.

The present invention thus is directed to a dye mixture comprising
at least one dye of formula (1) 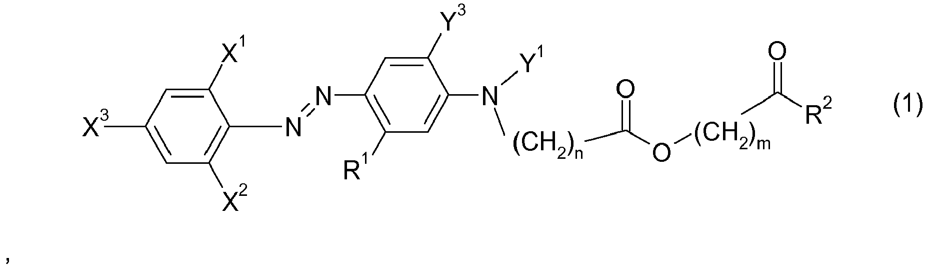 and one or more dyes selected from the group consisting of dyes of formulae (2), (5a) and (5b) 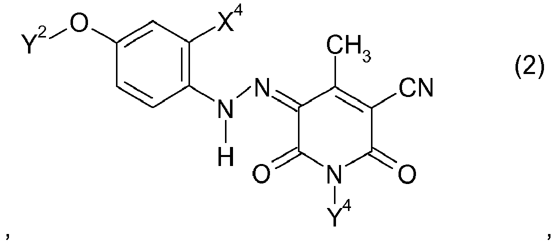 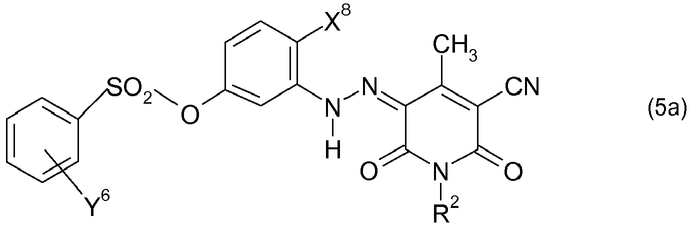 and 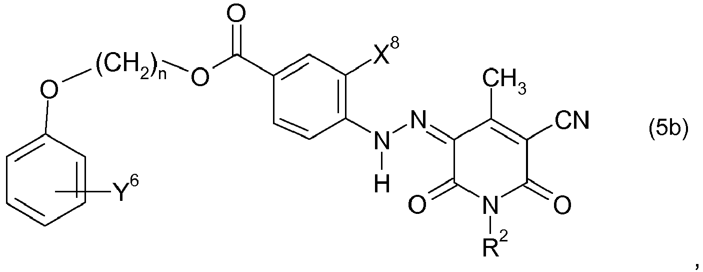 wherein independent from each other
R¹ is hydrogen, (C₁-C₄)-alkyl or halogen,
R² is hydrogen or (C₁-C₄)-alkyl,
X¹ to X⁸ is hydrogen, halogen, nitro, cyano, SCN, carboxy or CO-NR²R²,
Y¹ is hydrogen, (C₁-C₄)-alkyl, substituted (C₁-C₄)-alkyl, (C₂-C₄)-alkenyl or (CH₂)ₘ-phenyl,
Y² is phenyl or (CH₂)ₘ-phenyl, both substituted by Y⁶,
Y³ is hydrogen or (C₁-C₄)-alkyl,
Y⁴ is (C₁-C₈)-alkyl or (CH₂)ₘ-phenyl,
Y⁶ is hydrogen, nitro, cyano, carboxy, (C₁-C₄)-alkyl or (C₁-C₄)-alkoxy,
n and m are 1, 2, 3 or 4.

There also exist preferred dye mixtures and thus a dye mixture as described above, wherein independent from each other
R¹ is hydrogen or (C₁-C₂)-alkyl,
R² is (C₁-C₂)-alkyl,
X¹ and X² are hydrogen, bromo, chloro, nitro or cyano,
X³ is nitro or cyano,
X⁴ and X⁸ are hydrogen, nitro or cyano,
Y¹ is (C₁-C₄)-alkyl or (CH₂)ₘ-phenyl,
Y² is phenyl or (CH₂)ₘ-phenyl,
Y³ is hydrogen, or (C₁-C₂)-alkyl,
Y⁴ is (C₁-C₈)-alkyl,
n and m are 1 or 2
is preferred.

Even more preferred is a dye mixture as described above, wherein independent from each other
R¹ is hydrogen or methyl,
R² is methyl or ethyl,
X¹ and X² are hydrogen, bromo, chloro, nitro or cyano,
X³, and X⁴ are nitro,
X⁸ is hydrogen,
Y¹ and Y² are (CH₂)ₘ-phenyl,
Y³ is hydrogen or methyl,
Y⁴ is (C₁-C₈)-alkyl,
n and m are 1 or 2.

Most preferred, however, is a dye mixture as described above, wherein independent from each other
R¹ is hydrogen,
R² is methyl or ethyl,
X¹ and X² are hydrogen, bromo, chloro, nitro or cyano,
X³, and X⁴ are nitro,
X⁸ is hydrogen,
Y¹ and Y² are (CH₂)ₘ-phenyl,
Y³ is hydrogen,
Y⁴ is (C₁-C₄)-alkyl,
n and m are 1 or 2.

Besides from dye mixtures consisting of dyes of formula (1) and [(2) and/or (5a) and/or (5b)] also mixtures comprising dyes of formula (1) and [(2) and/or (5a) and/or (5b)] and additional dyes not mentioned above as shading components form aspects of the present invention. Of particular interest is
- a dye mixture as described above, comprising at least one dye of formula (2),
- a dye mixture as described above, comprising at least one dye of formula (5a) and
- a dye mixture as described above, comprising at least one dye of formula (5b).

As already mentioned all these dye mixtures may be used as such, i.e. may consist of the dyes mentioned above or may also comprise other dyes as shading components.

The dyes of formula (1) to (5) are known and can be prepared according to known procedures, for example from the documents:
EP 0 167 913, DE 27 15 34, DE 26 10 675, WO 2007 / 053474, DE 29 36 489, EP 0 161 665, JP 11158403, DE 19 646 429 and EP 0 440 072.

A process for the production of a dye mixture as described above, comprising
a) mixing the components (1), and [(2) and/or (5a) and/or (5b)],
b) homegenizing the mixture obtained in step a)
forms another aspect of the present invention.

Ranges of weight% of the components of the inventive dye mixtures are e.g.:

| | Brown |
|---|---|
| 1 : | 20-90 |
| 2: | 0-85 |
| 5a and/or 5b : | 0-50, |

with the proviso, that at least one of 2, 5a and 5b is not 0.

In each dye mixture the components 1 to 5b add up to 100 % in case the dye mixture consists of the dyes mentioned above or to less than 100 % in case additional dyes are added e.g. as shading components. In such a case the amount of shading components preferably is less than 10, more preferred less than 5 and most preferred less than 2 weight % based on the weight of all dyes of the dye mixture.

When the dye mixture of the present invention is used in dyeing, the dye mixture is dispersed in an aqueous medium by means of a dispersing agent and wetting agent in the usual way to prepare a dye bath for dyeing or a printing paste for textile printing. Thus also an aqueous solution for dying comprising a dye mixture as described above forms an aspect of the present invention. And also the use of a dye mixture as described above and/or an aqueous solution as described above for dying fibers, as well as blends of such fibres selected from the group consisting of: synthetic fibers: nylon, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers forms an aspect of the invention.

Typical examples of dispersing agent are lignosulphonates, naphthalene sulphonic acid/formaldehyde condensates and phenol/cresol/sulphanilic acid/formaldehyde condensates, typical examples of wetting agent are alkyl aryl ethoxylates which may be sulphonated or phosphated and typical example of other ingredients which may be present are inorganic salts, de-dusting agents such as mineral oil or nonanol, organic liquids and buffers. Dispersing agents may be present at from 30 to 500 % based on the weight of the dye mixture. Dedusting agents may be used at from 0 to 5 % based on the weight of the dye mixture.

A process for dyeing or printing carboxamido- and/or hydroxyl-containing material, comprising contacting the carboxamido- and/or hydroxyl-containing material with a dye mixture as described above and/or an aquous solution as described above forms yet another aspect of the present invention.

For example, in the case of dyeing polyester fibres and fibre mixture products such as blended yarn fabrics of union cloth product comprising polyester fibres can be dyed with good colour fastness by common dyeing methods, such as a high temperature dyeing method, a carrier dyeing method and a thermosol dyeing method. In some cases, the addition of an acid substance to the dye bath may result in even more successful dyeing.

Suitable process conditions may be selected from the following:
(i) exhaust dyeing at a pH of from 4 to 8.5, at a temperature of from 125 to 140 °C for from 10 to 120 minutes and under a pressure of from 1 to 2 bar, a sequestrant optionally being added;
(ii) continuous dyeing at a pH of from 4 to 8.5, at a temperature of from 190 to 225 °C for from 15 seconds to 5 minutes, a migration inhibitor optionally being added;
(iii) direct printing at a pH of from 4 to 6.5, at a temperature of from 160 to 185 °C for from 4 to 15 minutes for high temperature steaming, or at a temperature of from 190 to 225 °C for from 15 seconds to 5 minutes for bake fixation with dry heat or at a temperature of from 120 to 140 °C and 1 to 2 bar for from 10 to 45 minutes for pressure steaming, wetting agents and thickeners (such as alginates) of from 5 to 100 % by weight of the dye optionally being added;
(iv) discharge printing (by padding the dye on to the textile material, drying and overprinting) at a pH of from 4 to 6.5, migration inhibitors and thickeners optionally being added;
(v) carrier dyeing at a pH of from 4 to 7.5, at a temperature of from 95 to 100 °C using a carrier such as methylnaphthalene, diphenylamine or 2-phenylphenol, sequestrants optionally being added; and
(vi) atmospheric dyeing of acetate, triacetate and nylon at a pH of from 4 to 7.5, at a temperature of about 85 °C for acetate or at a temperature of about 90 °C for triacetate and nylon for from 15 to 90 minutes, sequestrants optionally being added.

In all the above processes, the dye mixture is applied as a dispersion comprising from 0.001 to 20 wt.%, preferably from 0.005 to 16 wt.%, of the inventive dye mixture in an aqueous medium.

In addition to the above-mentioned application processes, the dye mixture may be applied to synthetic textile materials and fibre blends by ink-jet printing, the substrates optionally having been pre-treated to aid printing.
An ink for digital textile printing, comprising a dye mixture as described above is another aspect of the present invention.
For ink-jet applications, the application medium may comprise water and a water-soluble organic solvent, preferably in a weight ratio of 1:99 to 99:1, more preferably 1:95 to 50:50 and especially in the range 10:90 to 40:60. The water-soluble organic solvent preferably comprises a C₁-C₄-alkanol, especially methanol or ethanol, a ketone, especially acetone or methyl ethyl ketone, 2-pyrrolidone or N-methylpyrrolidone, a glycol, especially ethylene glycol, propylene glycol, trimethylene glycol, butane-2,3-diol, thiodiglycol or diethylene glycol, a glycol ether, especially ethylene glycol monomethyl ether, propylene glycol monomethyl ether or diethylene glycol monomethyl ether, urea, a sulphone, especially bis-(2-hydroxyethyl) sulphone or mixtures thereof.
The dyestuff may also be applied to textile materials using supercritical carbon dioxide, in which case the dye formulating agents may optionally be omitted.

The synthetic textile material may preferably be selected from aromatic polyester, especially polyethylene terephthalate, polyamide, especially polyhexamethylene adipamide, secondary cellulose acetate, cellulose triacetate, and natural textile materials, especially cellulosic materials and wool. An especially preferred textile material is an aromatic polyester or fibre blend thereof with fibres of any of the above mentioned textile materials. Especially preferred fibre blends include those of polyester-cellulose, such as polyester-cotton, and polyester-wool. The textile materials or blends thereof may be in the form of filaments, loose fibres, yarn or woven or knitted fabrics.
Particularly, among polyester fibres, not only ordinary polyester fibres (regular denier fibres) but also microfibres (fine denier fibres, which are less than 0.6 denier) may be used as fibres which can successfully be dyed with the dye mixture of the present invention.
In general all kinds of fibers can be dyed and therefore fiber and blends containing such fiber selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers, and Lyocell fibers comprising a dye mixture as described above either in chemically and/or physically bound form forms/form another aspect of the present invention.

The examples which follow serve to illustrate the invention. Parts and percentages are by weight unless noted otherwise. The relationship of parts by weight to parts by volume is that of the kilogram to the liter.

### Examples:

### Example 1

### 31 parts dye of the formula (1-1)

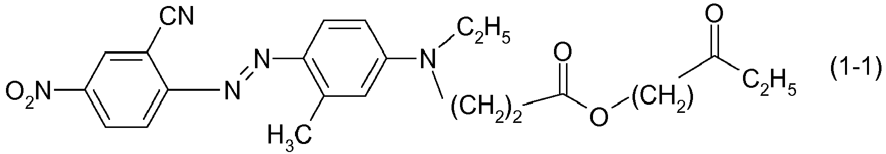

were mixed with 69 parts of a dye of the formula (2-1)

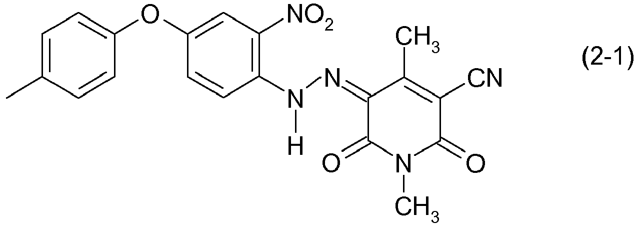

The resulting dye mixture of the invention was formulated using dispersing agent and dried via spray drying and gives deep brown dyeings and prints, both on polyester or polyester blends for example, under the dyeing conditions typical for disperse dyes.

### Example 2

### 75 parts dye of the formula (1-2)

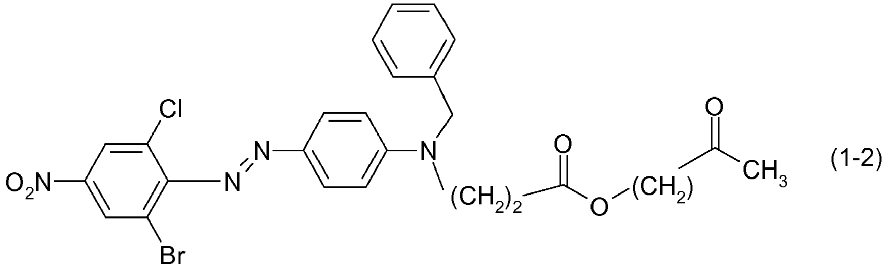

were mixed with 20 parts of a dye of the formula (2-2) 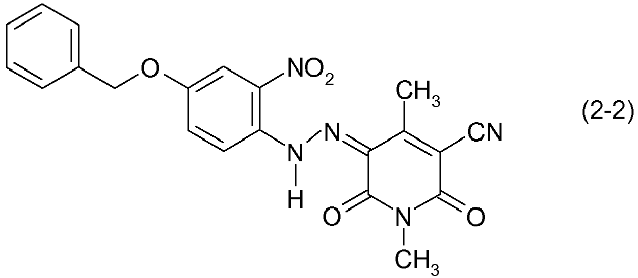 and mixed with 5 parts of a dye powder of the formula (5a-1)

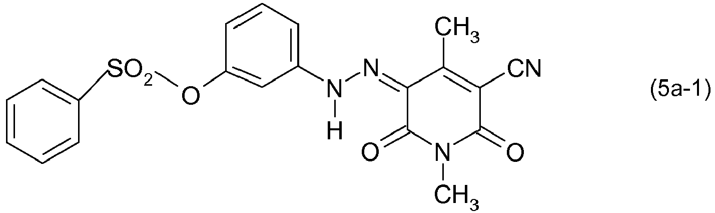

The resulting dye mixture of the invention was formulated using dispersing agent and dried via spray drying and gives yellow brown dyeings and prints, on polyester or polyester blends for example, under the dyeing conditions typical for disperse dyes.

### Example 3

### 85 parts dye of the formula (1-3)

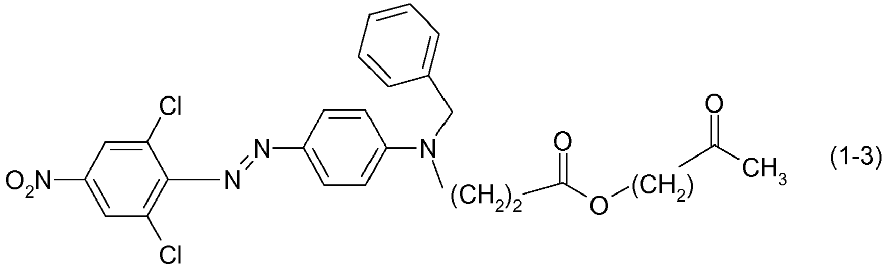

were mixed with 15 parts of a dye powder of the formula (5b-1)

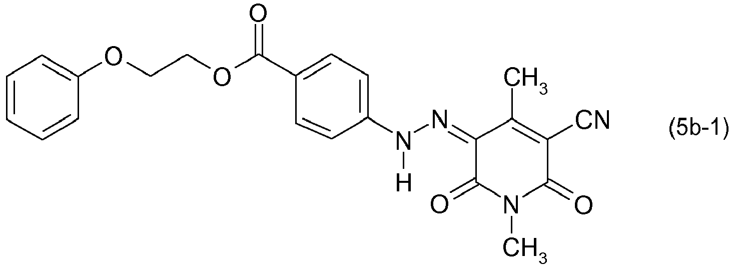

The resulting dye mixture of the invention was formulated using dispersing agent and dried via spray drying and gives yellow brown dyeings and prints, on polyester or polyester blends for example, under the dyeing conditions typical for disperse dyes.

### Example 4

### 71 parts dye of the formula (1-4)

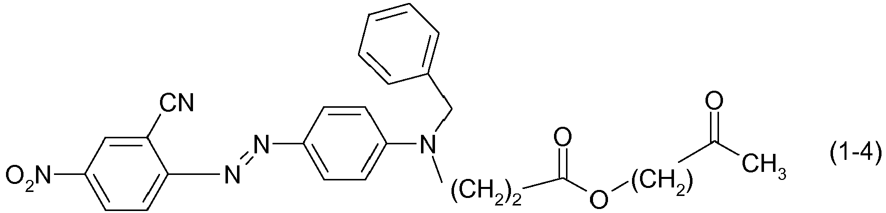

were mixed with 29 parts of a dye powder of the formula (5b-2)

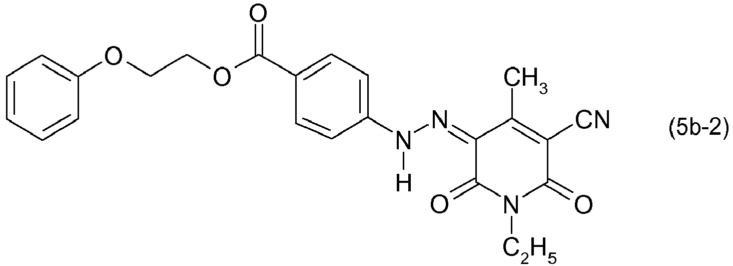

The resulting dye mixture of the invention was formulated using dispersing agent and dried via spray drying and gives deep brown dyeings or prints, on polyester or polyester blends for example, under the dyeing conditions typical for disperse dyes.

### Example 5

### 29 parts dye of the formula (1-4)

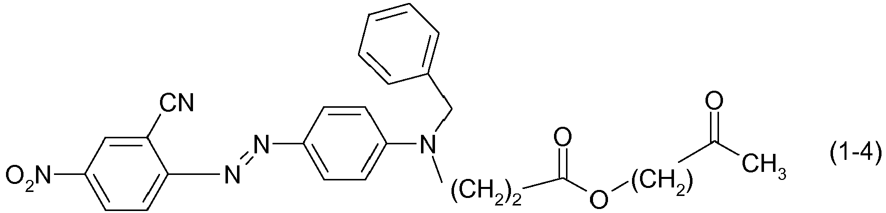

were mixed with 34 parts of a dye of the formula (2-2) 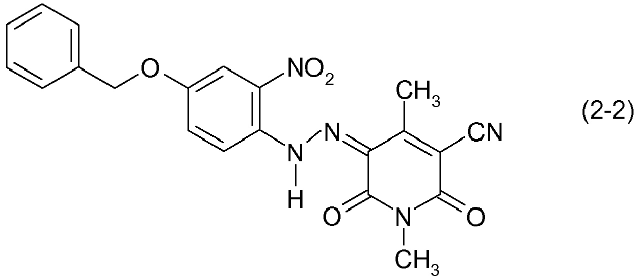 and mixed with 37 parts of a dye powder of the formula (5b-1)

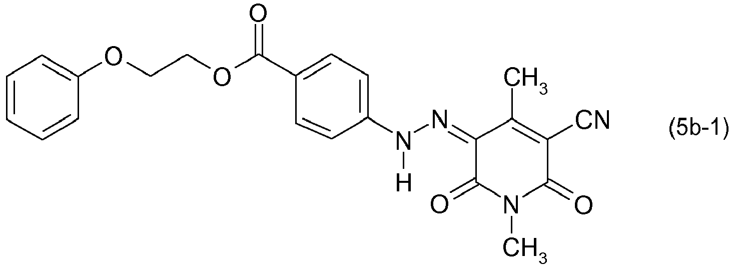

The resulting dye mixture of the invention was formulated using dispersing agent and dried via spray drying and gives deep brown dyeings or prints, on polyester or polyester blends for example, under the dyeing conditions typical for disperse dyes.

### Example 6

### 21 parts dye of the formula (1-5)

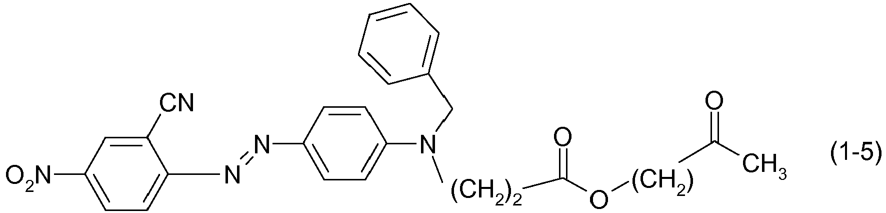

were mixed with 47 parts of a dye powder of the formula (1-6) 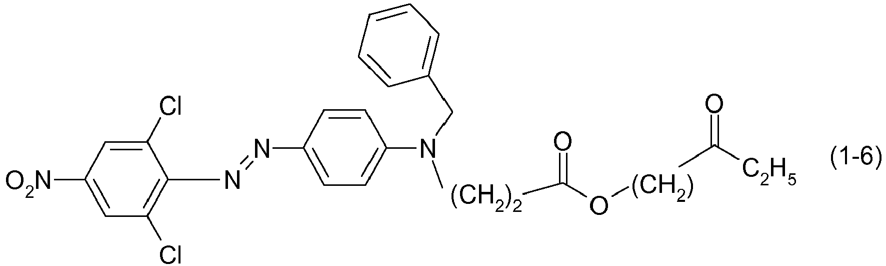 and mixed with 32 parts of a dye of the formula (2-6)

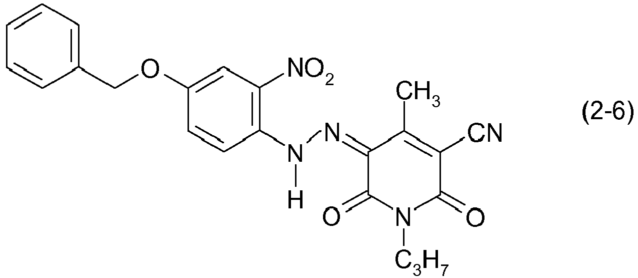

The resulting dye mixture of the invention was formulated using dispersing agent and dried via spray drying and gives deep brown dyeings or prints, on polyester or polyester blends for example, under the dyeing conditions typical for disperse dyes.

All examples of the following tables are prepared as formulations as explained above.

| Example | 1^{st} Dye of formula (1) | 2^{nd} Dye of formula (1) | Dye of formula (2) | Dye of formula (5) | Ratio (1):(1):(2):(5) | Shade on Polyester |
|---|---|---|---|---|---|---|
| 7 | X¹=NO₂ | | | (5b) | 70: --. --: 30 | Brown |
| | X²=H | -- | -- | X⁸=H | | |
| | X³=NO₂ | | | R²=C₂H₅ | | |
| | R¹=H R²=C₂H₅ | | | Y⁶=H | | |
| | Y¹=C₂H₅ | | | | | |
| | Y³=H | | | | | |
| | n=2 | | | | | |
| | m=1 | | | | | |
| 8 | X¹=NO₂ | | X⁴=NO₂ | (5a) | 30: --: 33: 37 | Brown |
| | X²=H | -- | Y²=CH₂-(p-Chloro-phenyl) | X⁸=H | | |
| | X³=NO₂ | | | R²=CH₃ | | |
| | R¹=H R²= C₂H₅ | | Y⁴=C₂H₅ | Y⁶=H | | |
| | Y¹=C₂H₅ | | | | | |
| | Y³=H | | | | | |
| | n=2 | | | | | |
| | m=1 | | | | | |
| 9 | X¹=Cl | -- | X⁴=NO₂ | | 77: --: 23:--: -- | Yellowbrown |
| | X²=Br | | Y²=CH₂-(p-methoxy-phenyl) | -- | | |
| | X³=NO₂ | | | | | |
| | R¹=H R²=CH₃ | | Y⁴=CH₃ | | | |
| | Y¹=CH₃ | | | | | |
| | Y³=H | | | | | |
| | n= 2 | | | | | |
| | m=1 | | | | | |
| 10 | X¹=Br | -- | -- | (5a) | 87: -- :--: 13 | Yellowbrown |
| | X²=Br | | | X⁸=H | | |
| | X³=NO₂ | | | R²=C₂H₅ | | |
| | R¹=H | | | Y⁶=H | | |
| | R²=CH₃ | | | | | |
| | Y¹=CH₂- phenyl | | | | | |
| | Y³=H | | | | | |
| | n=2 | | | | | |
| | m=1 | | | | | |
| 11 | X¹=Br | -- | X⁴=NO₂ | (5b) | 72: --: 22: 6 | Yellowbrown |
| | X²=Cl | | Y²=CH₂-phenyl | X⁸=H | | |
| | X³=NO₂ | | Y⁴=C₂H₅ | R²=CH₃ | | |
| | R¹=H | | | Y⁶=H | | |
| | R²=C₂H₅ | | | | | |
| | Y¹=CH₂- phenyl | | | | | |
| | Y³=H | | | | | |
| | n=2 | | | | | |
| | m=1 | | | | | |
| 12 | X¹=CN | X¹=Cl | X⁴=NO₂ | (5a) | 18: 26 :21: 35 | Brown |
| | X²=H | X²=Cl | Y²=CH₂-phenyl | X⁸=H | | |
| | X³=NO₂ | X³=NO₂ | Y⁴=C₂H₅ | R²=CH₃ | | |
| | R¹=H | R¹=H | | Y⁶=H | | |
| | R²=CH₃ | R²=CH₃ | | | | |
| | Y¹=CH₂- phenyl | Y¹=CH₂- phenyl | | | | |
| | Y³=H | Y³=H | | | | |
| | n=2 | n=2 | | | | |
| | m=1 | m=1 | | | | |
| 13 | X¹=NO₂ | X¹=Cl | X⁴=NO₂ | (5b) | 24:24:18:34 | Brown |
| | X²=H | X²=Br | Y²=CH₂-phenyl | X⁸=H | | |
| | X³=NO₂ | X³=NO₂ | Y⁴=CH₃ | R²=C₂H₅ | | |
| | R¹=H | R¹=H | | Y⁶=H | | |
| | R²=CH₃ | R²=C₂H₅ | | | | |
| | Y¹=CH₂- phenyl | Y¹=CH₂- phenyl | | | | |
| | Y³=H | Y³=H | | | | |
| | n=2 | n=2 | | | | |
| | m=1 | m=1 | | | | |
| 14 | X¹=CN | X¹=Br | | (5b) | 32: 44 :--:24 | Brown |
| | X²=H | X²=Br | | X⁸=H | | |
| | X³=NO₂ | X³=NO₂ | | R²=CH₃ | | |
| | R¹=H | R¹=H | | Y⁶=H | | |
| | R²=C₂H₅ | R²=CH₃ | | | | |
| | Y¹=CH₂- phenyl | Y¹=CH₂- phenyl | | | | |
| | Y³=H | Y³=H | | | | |
| | n=2 | n=2 | | | | |
| | m=1 | m=1 | | | | |
| 15 | X¹=NO₂ | X¹=Br | | (5a) | 30: 42 :-- :28 | Brown |
| | X²=H | X²=Cl | | X⁸=H | | |
| | X³=NO₂ | X³=NO₂ | | R²=C₃H₇ | | |
| | R¹=H | R¹=H | | Y⁶=H | | |
| | R²=CH₃ | R²=C₂H₅ | | | | |
| | Y¹=CH₂- phenyl | Y¹=CH₂- phenyl | | | | |
| | Y³=H | Y³=H | | | | |
| | n=2 | n=2 | | | | |
| | m=1 | m=1 | | | | |
| 16 | X¹=NO₂ | X¹=Cl | -- | (5b) | 20: 48 :-- :32 | Brown |
| | X²=Cl | X²=Cl | | X⁸=H | | |
| | X³=NO₂ | X³=NO₂ | | R²=CH₃ | | |
| | R¹=H | R¹=H | | Y⁶=H | | |
| | R²=CH₃ | R²=CH₃ | | | | |
| | Y¹=CH₂- phenyl | Y¹=CH₂- phenyl | | | | |
| | Y³=H | Y³=H | | | | |
| | n=2 | n=2 | | | | |
| | m=1 | m=1 | | | | |

## Claims

1. Dye mixture comprising
at least one dye of formula (1) 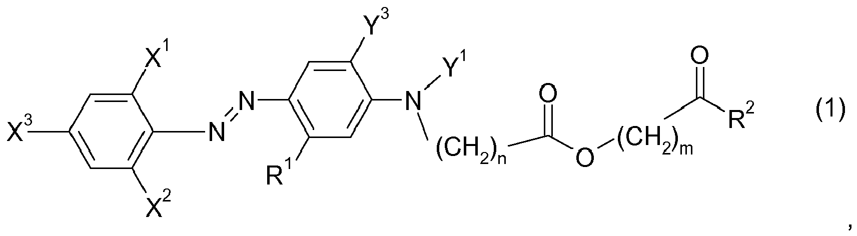 and one or more dyes selected from the group consisting of dyes of formulae (2), (5a) and (5b) 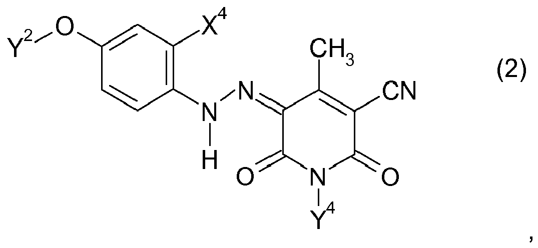 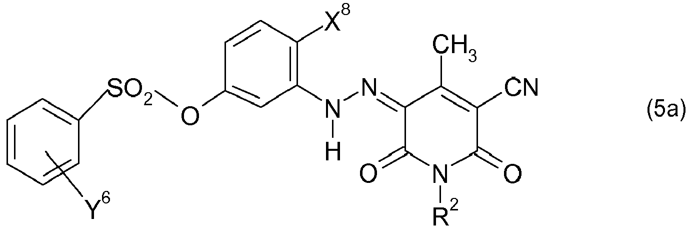 and 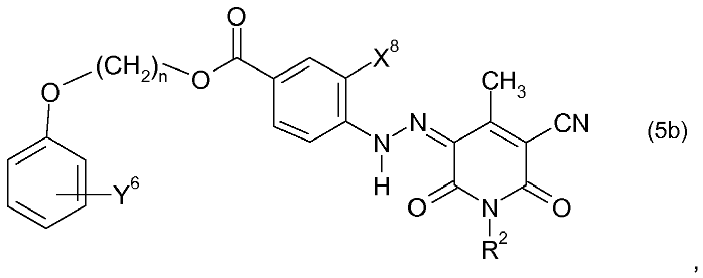 wherein independent from each other
R¹ is hydrogen, (C₁-C₄)-alkyl or halogen,
R² is hydrogen or (C₁-C₄)-alkyl,
X¹ to X⁸ is hydrogen, halogen, nitro, cyano, SCN, carboxy or CO-NR²R²,
Y¹ is hydrogen, (C₁-C₄)-alkyl, substituted (C₁-C₄)-alkyl, (C₂-C₄)-alkenyl or (CH₂)ₘ-phenyl ,
Y² is phenyl or (CH₂)ₘ-phenyl, both substituted by Y⁶,
Y³ is hydrogen or (C₁-C₄)-alkyl,
Y⁴ is (C₁-C₈)-alkyl or (CH₂)ₘ-phenyl,
Y⁶ is hydrogen, nitro, cyano, carboxy, (C₁-C₄)-alkyl or (C₁-C₄)-alkoxy, n and m are 1, 2, 3 or 4.

2. Dye mixture according to claim 1, wherein independent from each other
R¹ is hydrogen or (C₁-C₂)-alkyl,
R² is (C₁-C₂)-alkyl,
X¹ and X² are hydrogen, bromo, chloro, nitro or cyano,
X³ is nitro or cyano,
X⁴ and X⁸ are hydrogen, nitro or cyano,
^{y1} is (C₁-C₄)-alkyl or (CH₂)ₘ-phenyl ,
Y² is phenyl or (CH₂)ₘ-phenyl,
Y³ is hydrogen, or (C₁-C₂)-alkyl,
Y⁴ is (C₁-C₈)-alkyl ,
n and m are 1 or 2.

3. Dye mixture according to claim 1 or 2, wherein independent from each other
R¹ is hydrogen or methyl,
R² is methyl or ethyl,
X¹ and X² are hydrogen, bromo, chloro, nitro or cyano,
X³, and X⁴ are nitro,
X⁸ is hydrogen,
Y¹ and Y² are (CH₂)ₘ-phenyl ,
Y³ is hydrogen or methyl,
Y⁴ is (C₁-C₈)-alkyl,
n and m are 1 or 2.

4. Dye mixture according to any one of claims 1 to 3, wherein independent from each other
R¹ is hydrogen,
R² is methyl or ethyl,
X¹ and X² are hydrogen, bromo, chloro, nitro or cyano,
X³, and X⁴ are nitro,
X⁸ is hydrogen,
Y¹ and Y² are (CH₂)ₘ-phenyl ,
Y³ is hydrogen,
Y⁴ is (C₁-C₄)-alkyl,
n and m are 1 or 2.

5. Dye mixture according to any one of claims 1 to 4, comprising at least one dye of formula (2).

6. Dye mixture according to any one of claims 1 to 5, comprising at least one dye of formula (5a).

7. Dye mixture according to any one of claims 1 to 6, comprising at least one dye of formula (5b).

8. Aqueous solution for dying comprising a dye mixture according to any one of claims 1 to 7.

9. Process for the production of a dye mixture according to any one of claims 1 to 7, comprising
a) mixing the components (1), and [(2) and/or (5a) and/or (5b)],
b) homegenizing the mixture obtained in step a).

10. Process for dyeing or printing carboxamido- and/or hydroxyl-containing material, comprising contacting the carboxamido- and/or hydroxyl-containing material with a dye mixture according to any one of claims 1 to 7 and/or an aquous solution according to claim 8.

11. Ink for digital textile printing, comprising a dye mixture according to any one of claims 1 to 7.

12. Use of a dye mixture according to any one of claims 1 to 7 and/or an aqueous solution according to claim 8 for dying fibers, as well as blends of such fibres selected from the group consisting of: synthetic fibers: nylon, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers.

13. Fiber and blends containing such fiber selected from the group consisting of: synthetic fiber materials, nylon materials, nylon-6, nylon-6.6 and aramid fibres, vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers, and Lyocell fibers comprising a dye mixture according to any one of claims 1 to 7 either in chemically and/or physically bound form.
